# EUROPEAN PATENT SPECIFICATION

(11) **EP 0 633 123 B1**
(45) Date of publication and mention of the grant of the patent: **28.04.1999**
(21) Application number: 92923977.0
(22) Date of filing: 18.11.1992
(51) Int. Cl.: B29C 49/58, B29C 49/60, B29C 49/62, B29C 49/64, B29C 49/04, B29L 22/00

(54) **METHOD FOR BLOW MOLDING TUBULAR CONTAINER**
VERFAHREN ZUM BLASFORMEN VON ROHRFOERMIGEN BEHAELTERN
PROCEDE DE MOULAGE PAR SOUFFLAGE D'UN RECIPIENT DE FORME TUBULAIRE

(43) Date of publication of application: 11.01.1995
(73) Proprietor: TOYO SEIKAN KAISYA, LTD., Tokyo (JP)
(72) Inventor: TAKAKUSAKI, Nobuyuki 21-9, Syodo 4-chome Sakae-ku, Kanagawa 247 (JP); TERAJIMA, Yoshimi 12-19, Kokubunjidai 1-chome, Kanagawa 243-04 (JP); TAKEDA, Isamu 43-11, Tomigaya 1-chome, Tokyo 151 (JP)
(74) Representative: Müller-Boré & Partner Patentanwälte
(86) International application number: JP9201504
(87) International publication number: WO9411178

(56) References cited:
- JP-A-60 120 031
- JP-B-63 026 687
- US-A- 3 114 931
- US-A- 3 338 998
- US-A- 3 592 886
- PATENT ABSTRACTS OF JAPAN vol. 9, no. 231 (M-414) (1954) 18 September 1985 & JP-A-60 087 035 (KOJIMA PRESS KOGYO K.K.) 16 May 1985

## Description

### Technical Field

This invention relates to a method for blow-molding a tube container and, more particularly, to a blow-molding method which enables one to shorten the time for cooling moldings immediately after being blow-molded and to effectively produce moldings having good dimensional accuracy.

### Prior Art

In molding a tube container from a thermoplastic resin according to blow molding technique, it has been conducted to pierce the upper portion of a parison having been melt extruded from an extruder with a blow nozzle for introducing blow air, and blow a compressed air into the parison through the nozzle, or to introduce a compressed air into the parison from the upper portion or lower portion in the axial direction to thereby press the parison against the wall of a mold for shaping a closed-end cylindrical container, followed by cooling the container, taking it out of the mold, and cutting the lower portion thereof to produce a tube container.

The thus molded tube container is engaged with a cap, and the capped tube container is fed to a filling machine. Then, the tube container is filled with contents through the cut portion, and the cut end is sealed. The resulting tube containers are then brought to the market.

Japanese Examined Patent Publication No. S59-3260 discloses a blow molding method for producing hollow containers, in which nip-pressing plates located at the upper position of a split mold for holding a softened parison are not directly in contact with each other but are formed partly with a space therebetween, the nip-pressing plates co-work to nip the parison, the thus-sealed parison is pierced at its side wall with a blow nozzle, blow air is continuously fed through the blow nozzle to shape a hollow container, then the space portion of said nip-pressing plates are broken by the pressure of blow air to form a discharge outlet through which the pressing fluid filling the mold is discharged.

As another conventional process for blow molding a hollow container such as a tube container, blow air introduced through a blowing inlet presses the softening-state parison against the wall of the mold to shape a tube container, then is discharged through a discharge outlet formed above the blow nozzle-pierced portion. However, since the molded tube container has a long and narrow form with a closed end, the blow air is discharged before suficiently flowing within the tube container. Therefore, the blow air used for shaping the tube container does not flow but remains in the lower portion of the container. Thus, subsequent cooling of the wall of the tube container is mainly conducted by circulating cooling water in the mold in contact with the tube container.

However, this method requires a considerably long time for cooling the shaped tube container still kept at an elevated temperature to such a degree that the mold can be opened. Thus, there arises a problem in view of molding efficiency.

That is, in conventional blow molding method for producing a tube container, cooling of the shaped moldings have been conducted only by cooling the mold, and nothing has been taken into consideration for enhancing cooling efficiency. In addition, although manner of piercing the wall of a parison with a blow nozzle and shape of an air-introducing inlet have been studied, no attention has been paid to how the blow air introduced through the nozzle can most effectively shape and cool the molding (tube contaier).

From the US-A-3114931 there is known a blow-molding method with internal air cooling, in which a wall portion of the usefull container can be pierced by a needle, thus providing a pressure relief opening, which communicates with a valve for setting a suitable pressure within the formed container.

From the US-A-3338998 there is known a further method of blow-molding hollow thermoplastic articles. In this known method a venting orifice is formed at any upper position that will not interfere with the use of the final product. According to the described method the cooling air is introduced from an upper portion. A part of the introduced air is sent to the bottom, is returned by the bottom of the product and sent back to the top portion and exits via the venting orifice in the upper portion.

It is an object of the present invention to provide a method for blow-molding a tubular container, in particular having a long and slender shape, in which the blow air introduced into the tube container is well fluidised, such that an efficient cooling is achieved, which allows for faster removal from the mold.

This object is achieved by a method having the features of claim 1. Preferred embodiments are defined in the dependent subclaims. In particular the inventive method allows fast cooling of the tubular container by providing a venting orifice opposit to the air supply, such that the circulating air is substantially passed only once through said container without being returned. Further, by using an unnecessray portion of the tubular container the quality of the final product is not imparted.

Preferably there is provided a method for blow molding a tube container using a parison having been extruded from an extruder, which comprises intdroducing blow air into the parison to shape a tube container, forming an outlet in the wall of an unnecessary portion of the tube container located on the opposite side where a blow air-introducing inlet is provided, and continuing feeding of the blow air.

According to another aspect of the present invention, there is provided a blow molding method for blow molding a tube container using a parison having been extruded from an extruder, which comprises intdroducing blow air into the parison to shape a tube container, forming an outlet in the outer wall of a portion of the tube container to be cut off, and continuing feeding of the blow air.

As to the manner of introducing blow air, either horizontally blowing type in which the wall of a parison having been extruded from an extruder is pierced with a blow nozzle for introducing blow air or vertically blowing type in which blow air is introduced in the axial direction of the parison, i.e., in the downward or upward direction.

The discharge outlet is preferably formed in the tube container simultaneously with or after shaping of the tube container. However, it may be formed during shaping or, for the reason of mechanical timing, some time after shaping.

Alternatively, the discharge outlet may be formed by pressing the wall of softened tube container against an opening of the passageway formed in the wall of the mold and connecting to the cavity using the blow air ,or by piercing the container with a needle-like member from outside the mold.

In the case of conducting the blow molding of the present invention in a horizontally blowing manner, another similar discharge outlet may be formed in the vicinity of or above the blow nozzle-pierced portion after forming a discharge outlet in part of the lower wall of the portion of tube container to be cut off.

The thus formed discharge outlet serves to effectively cool the portion in the vicinity of the blow nozzle-pierced portion.

### Brief description of the drawings

Fig. 1 is a schematic view illustrating one embodiment of the blow molding method of the present invention in which a tube container is blow molded in a horizontally blowing manner.
Fig. 2 is a schematic view illustrating another embodiment of the blow molding method of the present invention in which a tube container is blow molded in a vertically blowing manner.

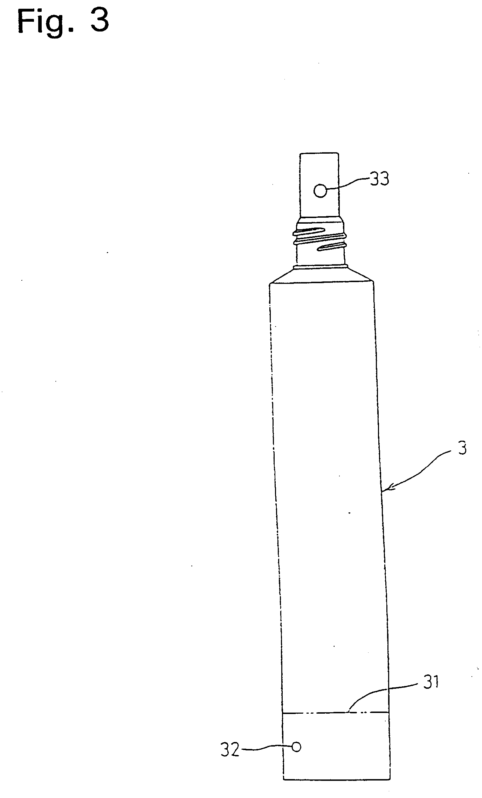

Fig. 3 is a schematic view illustrating a tube container in a state of being shaped by the blow molding method of the present invention and having a discharge outlet for blow air.

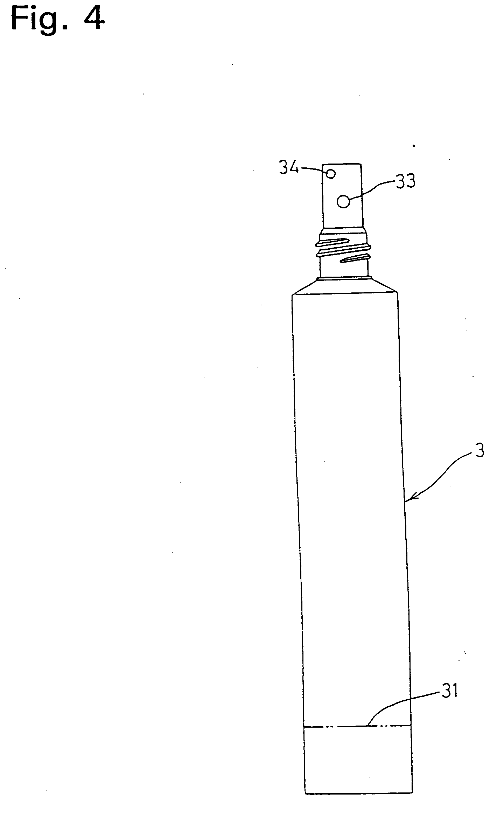

Fig. 4 is a schematic view illustrating a tube container formed by conventional blow moldng method.
Figs. 5 and 6 are schematic view illustrating a blow moldng method of the present invention for forming two tube containers using a two-cavity mold.

### Best mode for practicing the invention

A first technical feature of the present invention is to form a discharge outlet for blow air in the lower part of the portion to be cut off after shaping of a tube container, simultaneously with or immediately after the blow air filling the mold to shape the tube container.

Since the discharge outlet controls discharge of the blow air filling the tube container, the blow air does not stay inside the mold after formation of the tube container but circulates inside the tube container to rapidly cool the hot tube container.

Another technical feature of the present invention is that, after formation of the discharge outlet, introduction of the blow air is continued.

Continuous introduction of the blow air enables the blow air to effectively move within the tube container before being discharged, which serves to rapidly cool the tube container still in a hot state.

Therefore, combination of the above-described two technical features serves to more effectively conduct rapid cooling of the tube container.

This point is described in more detail below. The introduced blow air instantly descends toward the bottom of the tube container to reach the bottom. When the blow air reaches the bottom, the softening-state material is shaped in conformity with the shape of the mold and, at the same time or slightly later than that, a discharge outlet is formed in part of the wall of lower portion to be cut off after molding, through which the blow air filling the mold is discharged. The discharge of the blow air permits smooth movement of continuously introduced blow air to thereby rapidly cool the tube container.

In blow molding of the tube container, a closed-end, tube-like container is first formed and, after taking the molding out of a mold, the lower part of the container is cut off to form an opening through which its contents are loaded. Upon shaping of the tube container, however, the introduced blow air is discharged out through the discharge outlet formed in the vicinity of or above the blow nozzle-pierced portion almost without circulation inside the container, particularly toward the bottom. Thus, cooling of the container, particularly cooling of the lower part thereof, by the blow air is not conducted, and the cooling is conducted only by the cooled mold in contact therewith.

Therefore, it takes a long period of time for the molded container to be cooled, leading to deteriorated molding efficiency.

According to the method of the present invention, a large amount of the blow air introduced through a blow nozzle moves toward the bottom, a discharge outlet is formed in part of the lower wall of the container to be cut off, and this discharge outlet accelerates circulation of the blow air inside the tube container and permits uniform and rapid cooling of the whole tube container. Thus, tube containers can be blow molded with high molding efficiency.

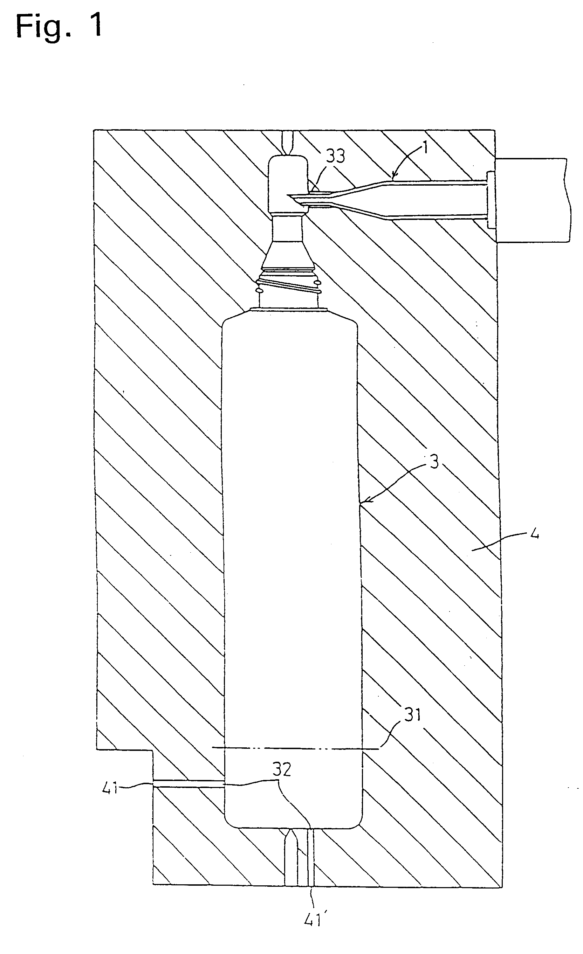

In Fig. 1, a blow air introduced through a blow air inlet 33 formed by piercing the upper portion of a parison with a blow nozzle 1 presses the softening-state parison against the surface of a mold to shape a tube container 3. In the present invention, a discharge outlet 32 is formed in part of the wall located lower than the position 31 along which the container will be cut after completion of the molding. As has been described hereinbefore, this discharge outlet 32 is preferably formed by breaking through the tube container at the particular portion of the wall below the cutting line 31 utilizing the pressure of blow air. However, it may be formed by piercing the wall with a needle-like member from outside the mold.

Since this discharge outlet controls discharge of the blow air inside the container, the blow air does not stay inside the container but smoothly circulates to rapidly cool the tube container. Said discharge outlet 32 may be formed either in the side wall or the bottom of the tube container, with lower wall being preferred.

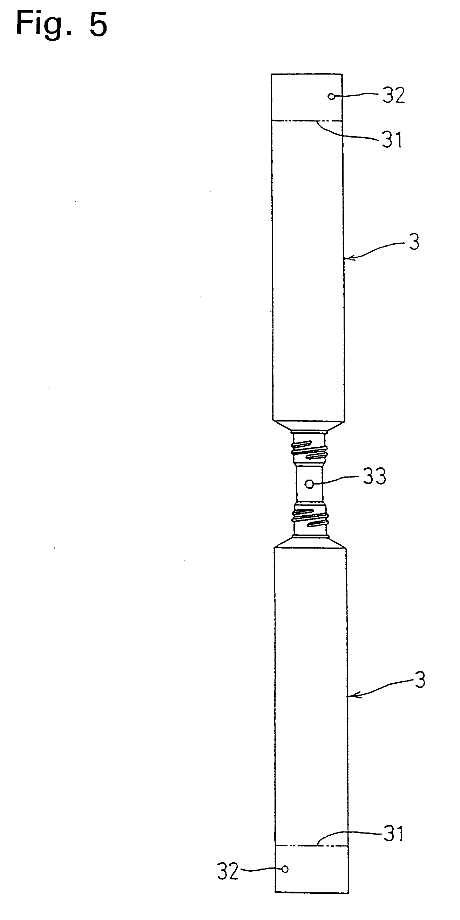

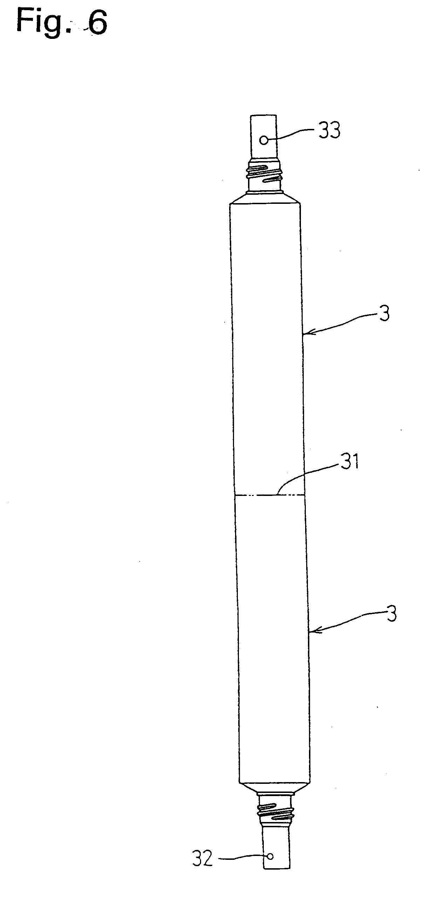

Additionally, in Fig. 1, description of tube container is made by reference to a one-cavity mold but, as is chown in Figs. 5 and 6, the method of the present invention can similarly be applied to a two-cavity mold wherein two tube containers shown in Fig. 1 are to be molded in a vertical and symmetrical state with the bottom connecting to each other or with the unnecessary portions in the neck direction connecting to each other.

That is, in the case shown by Fig. 5, an intermediate unnecessary portion between two tube containers connecting to each other in a top-to-top manner is pierced with a blow nozzle to form a blowing inlet 33, whereas discharge outlets 32 may be formed outside the portions in the bottom direction located upward and downward to be cut off. In the case shown by Fig. 5, the discharge outlets may be formed in the vicinity of the top of each tube container, i.e., in the upper or lower portion to be cut off after shaping of the tube container.

In conventional blow molding methods, most of the blow air introduced through the upper portion of a parison once comes into contact with the wall opposite to the blowing inlet, then moves downward and upward but, upon shaping of a tube container, migration of blow air in the downward direction stops and breaks a thin portion located in the vicinity of or above the blow nozzle-pierced portion to form a discharge outlet 34, through which blow air is discharged. That is, blow air is discharged at this time, and hence circulation of blow air in the downward direction scarcely takes place. Thus, cooling of the molded tube container is conducted only by the mold in contact with the body of the container, resulting in seriously decreased cooling efficiency.

On the other hand, in the method of the present invention, blow air is discharged through a discharge outlet 32 formed in part of the wall below the cutting position 31 in the course of or after shaping of the tube container. Therefore, blow air introduced from above does not stay but effectively circulates before being discharged, thus tube container 3 being rapidly cooled.

The discharge outlet to be formed in part of the lower wall below the cutting line will be described in detail below.

One or more passageways (41 and 41') connecting to the cavity are formed in one or more positions of the mold 4 for molding a tube container located below the cutting line, and a wall portion of shaped tube container corresponding to the opening or openings is broken through by the pressure of continuously fed blow air, and the broken portion forms a discharge outlet 32 functioning to control discharge of blow air.

As has been described hereinbefore, the discharge outlet 32 may be forcibly formed by piercing from outside of the passageways 41 and 41' with a needle member (not shown) instead of breakage from inside by the pressure of blow air. The needle member may be of an injection needle shape with a hollow core conncecting to the outside of the mold or may be of a solid needle. In the case of using an injection needle-type member, the blow air is discharged out of the mold through its hollow portion. In the case of usng a solid needle member, the blow air is discharged through a hole formed by drawing out the needle member after piercing the wall of the container with it.

The horizontally blowing type blow nozzle 1 to be used in the present invention is not limited to that shown by Fig. 1 as to the structure, but blow nozzles having a blow air-introducing inlet located at the central portion of the nozzle or nozzles having blow air-introducing inlets in vertical two directions or in 4 directions (vertical and horizontal) may properly be used.

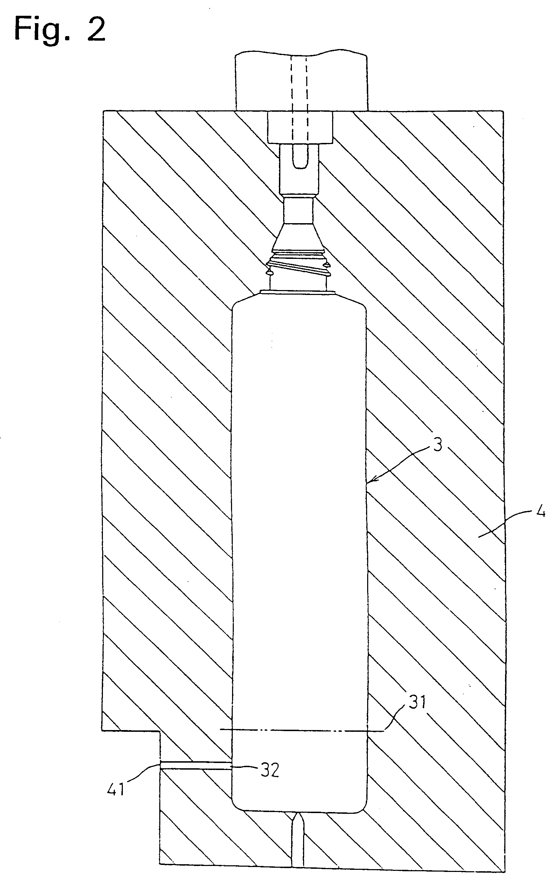

For instance, as is shown in Fig. 2, a vertical blowing type blow nozzle which introduces blow air from above in the axial direction of a parison may also be used.

In the horizontally blowing type blow molding method shown in Fig. 1, an upper wall portion of a parison is pierced with blow nozzle 1, and the blow air-introducing inlet is located at about the center inside the parison, thus blow air being introduced in a horizontal direction into the parison. In the vertically blowing type blow molding method shown in Fig. 2, blow air is introduced in the axial direction of the parison, i.e., upward or downward.

In both blow molding methods, the parison is shaped into a tube container in conformity with the shape of the mold when blow air is introduced into the softening-state parison and, at this point, a discharge outlet 32 is formed in the wall in contact with a passageway 41 formed in the mold and located below the cutting line. Upon formation of the discharge outlet 32, the blow air filling the container is discharged, and hence the blow air effectively circulates within the container even after shaping of the container to contribute to rapid and uniform cooling of the shaped container.

However, the discharge outlet 32 is intended to cause air flow for moving the blow air within the tube container and not intended to discharge the whole blow air inside the tube container. Most of the blow air inside the tube container is discharged through the blowing inlet 33 formed upon piercing with the blow nozzle 1, simultaneously with rapid backward movement of the blow nozzle 1 at the completion of the introduction of blow air. Only at this point, the pressure within the tube container is restored to the atmospheric pressure. Additionally, discharge of blow air is also conducted through an opening (not shown) connecting to the blow nozzle.

As has been described in detail, the present invention permits blow air to effectively circulates within the tube container, and blow molding cycle can be markedly shortened by using the opening left after backward movement of the blow nozzle as a main discharge outlet. Such advantage can be obtained only by forming the aforesaid discharge outlet 32 below the cutting line 31 located at the lower portion of the tube container.

### Example

Advantages of the present invention of blow molding a tube container are now described in more detail by reference to the following example.

Additionally, conditions under which the average temperature in thicknesswise direction becomes 39.1°C when blow molding conditions of 23°C in blow air temperature, 14°C in the surface temperature of the mold, and 9.5 seconds in cooling time are employed as in the conventional blow molding are taken as standard conditions.

Experiments of molding the same shaped moldings were conducted using the same materials and changing part of the blowing conditions to determine conditions for cooling the moldings to the average temperature of 39.1°C in the thicknesswise direction.

The blow nozzle used in the experiments had a blow air-introducng inlet of 1.0 ⌀, and the diameter of the discharge outlet formed below the cutting line was 0.7 ⌀. A discharge outlet formed by the backward movement of the blow nozzle after completion of blowing was 2.0 ⌀. Thus, discharge outlets of 0.7 ⌀ and 2.0 ⌀ functioned after completion of the blowing.

According to this experiment, when blow molding was conducted under the same conventional conditions, the average temperature in the thicknesswise direction became 39.1 in 6.5 seconds.

That is, the blow molding method of the present invention shortens the molding cycle by 32 % (100 - 6.5/9.5x100) in comparison with the conventional blow molding method.

As is clear from the above results of the experiments, according to the present invention, blow air is instantly introduced and is allowed to rapidly circulate throughout the molding, and the blow air introduced with pressure is rapidly discharged, thereby blow molding cycle being markedly shortened.

Therefore, the constitution of the present invention that a large amount of blow air is fed and, after shaping, a discharge outlet is formed in an unnecessary portion of the wall of shaped container to thereby allow blow air to effectively circulate inside the molding has a remarkable technical significance.

### Advantages of the Invention:

As has been described in detail, according to the present invention, a discharge outlet is formed in part of the wall of a tube container below a cutting position, said tube container being shaped by introducing blow air, the blow air is then discharged through the discharge outlet to thereby allow the blow air to effectively circulate along the inside surface of the molding, and an opening left after backward movement of the blow nozzle functions as a main discharge outle to instantly discharge the compressed air inside the molding. As a result, the molding can be cooled uniformly and rapidly.

## Claims

1. A method for blow-molding tubular containers which comprises introducing blow air into a parison to shape the tubular container; making the thickness thin of a part of the wall which is an unnecessary portion of the tubular container and which is located at the opposite side to an inlet for introducing blow air by the pressure of blow air continoulsy introduced; breaking the wall where the thickness having been made thin to form a discharge outlet for blow air; and further continously introducing blow air.

2. A method for blow-molding as set forth in claim 1, wherein blow air is introduced into the parison to shape the tubular container while forming the discharge outlet in a part of the wall outside a cutting position of the tube container and blow air is continuously supplied.

3. A method for blow-molding as set forth in claim 1, wherein blow air is introduced in a horizontal blowing manner in which the wall of the parison extruded from an extruder is pierced with a blow nozzle through which blow air is introduced into the parson.

4. A method for blow-molding as set forth in claim 1, wherein blow air is introduced in a vertical blowing manner in which blow air is introduced in the axial direction of the parson extruded from an extruder.

5. A method for blow-molding as set forth in claim 1, wherein the blow air is introduced through a blow nozzle having four openings facing upward, downward, rightward and leftward, respectively.

6. A method for blow-molding as set forth in claim 1, wherein the discharge outlet is formed in a part of the side wall located below the cutting position.

7. A method for blow-molding as set forth in claim 1, wherein two tubular containers are blow-molded in a bottom-to-bottom symmetrical mode, and an inlet for blow air is formed in the outer side of the top of one tubular container while the discharge outlet for blow air is formed in the outer side of the top of the other tubular container.

8. A method for blow-molding as set forth in claim 1, wherein two tubular containers having the bottom thereof on both ends are blow-molded in a top-to-top symmetrical mode with an unnecessary portion to be cut off therebetween, and an inlet for blow air is formed in the unnecessary portion between the two tops of the tubular containers and the discharge outlet for blow air is formed outside the cutting line located at both ends.

## Patentansprüche

1. Verfahren zum Blasformen rohrförmiger Behälter mit einem Einführen von Blasluft in einen Vorformling, um den rohrförmigen Behälter zu formen; einem Dünnermachen der Dicke eines Teiles der Wand, die ein unnötiger Abschnitt des rohrförmigen Behälters ist und die an der zu einem Einlaß zum Einlassen von Blasluft gegenüberliegenden Seite angeordnet ist, und zwar durch den Druck von fortwährend eingeführter Blasluft; einem Brechen bzw. Durchbrechen der Wand, wo die Dicke dünn gemacht wurde, um einen Austrittsauslaß für Blasluft zu bilden; und einem weiteren fortwährenden Einlassen von Blasluft.

2. Verfahren zum Blasformen nach Anspruch 1, wobei Blasluft in den Vorformling eingeführt wird, um den rohrförmigen Behälter zu bilden bzw. gestalten, während ein Austrittsauslaß in einem Teil der Wand außerhalb einer Schnittposition des rohrförmigen Behälters bzw. Rohrbehälters gebildet wird und Blasluft fortwährend zugeführt wird.

3. Verfahren zum Blasformen nach Anspruch 1, wobei Blasluft in einer horizontalen Blasweise eingeführt wird, bei welcher die Wand des durch einen Extruder extrudierten Vorformlings mit einer Blasdüse durchstochen wird, durch welche Blasluft in den Vorformling eingeführt wird.

4. Verfahren zum Blasformen nach Anspruch 1, wobei Blasluft in einer vertikalen Blasweise eingeführt wird, bei welcher Blasluft in der axialen Richtung des Vorformlings eingeführt wird, welcher mit einem Extruder extrudiert wurde.

5. Verfahren zum Blasformen nach Anspruch 1, wobei die Blasluft durch eine Blasdüse eingeführt wird, die vier Öffnungen aufweist, die nach oben bzw. nach unten bzw. nach rechts bzw. nach links ausgerichtet sind.

6. Verfahren zum Blasformen nach Anspruch 1, wobei der Austrittsauslaß in einem Teil der Seitenwand gebildet ist, welcher unter der Schneidposition angeordnet ist.

7. Verfahren zum Blasformen nach Anspruch 1, wobei zwei rohrförmige Behälter in einem Boden-zu-Boden symmetrischen Modus blasgeformt werden und ein Einlaß für Blasluft in der Außenseite des Oberteils eines rohrförmigen Behälters gebildet wird, während der Austrittsauslaß für Blasluft in der Außenseite des Oberteils des anderen rohrförmigen Behälters gebildet wird.

8. Verfahren zum Blasformen nach Anspruch 1, wobei zwei rohrförmige Behälter, die ihre Böden an beiden Enden haben, in einem Oberteil-zu-Oberteil symmetrischen Modus blasgeformt werden, wobei ein unnötiger Abschnitt dazwischen abzuschneiden ist und ein Einlaß für Blasluft in dem unnötigen Abschnitt zwischen den beiden Oberteilen der rohrförmigen Behälter gebildet wird und der Austrittsauslaß für Blasluft außerhalb der jeweils an beiden Enden angeordneten Schnittlinie gebildet wird.

## Revendications

1. Procédé de moulage par soufflage de récipients tubulaires, qui comprend l'introduction d'air de soufflage dans une ébauche afin de mettre en forme le récipient tubulaire ; l'amincissement d'une partie de la paroi, qui constitue une partie non nécessaire du récipient tubulaire et qui est située au niveau du côté opposé à un orifice d'admission servant à l'introduction de l'air de soufflage, par la pression de l'air de soufflage amené en continu ; et la rupture de la paroi, là où l'amincissement a été effectué, afin de constituer un orifice d'évacuation pour l'air de soufflage ; et la poursuite de l'introduction d'air de soufflage.

2. Procédé de moulage par soufflage selon la revendication i, dans lequel l'air de soufflage est introduit dans l'ébauche pour mettre en forme le récipient tubulaire tout en formant l'orifice d'évacuation dans une partie de la paroi, située en dehors d'une position de coupe du récipient tubulaire, et dans lequel de l'air de soufflage est amené en continu.

3. Procédé de moulage par soufflage selon la revendication 1, dans lequel l'air de soufflage est introduit d'une manière horizontale, par laquelle la paroi de l'ébauche, extrudée à partir d'une extrudeuse, est percée par une buse de soufflage par l'intermédiaire de laquelle l'air de soufflage est introduit dans l'ébauche.

4. Procédé de moulage par soufflage selon la revendication 1, dans lequel l'air de soufflage est introduit d'une manière verticale, par laquelle l'air de soufflage est introduit dans le sens axial de l'ébauche, extrudée à partir d'une extrudeuse.

5. Procédé de moulage par soufflage selon la revendication 1, dans lequel l'air de soufflage est introduit par l'intermédiaire d'une buse de soufflage ayant quatre orifices dirigés, respectivement, vers le haut, vers le bas, vers la droite et vers la gauche.

6. Procédé de moulage par soufflage selon la revendication 1, dans lequel l'orifice d'évacuation est formé dans une partie de la paroi latérale, située au-dessous de la position de coupe.

7. Procédé de moulage par soufflage selon la revendication 1, dans lequel deux récipients tubulaires sont moulés par soufflage selon un mode symétrique fond contre fond, et un orifice d'admission pour l'air de soufflage est formé dans le côté extérieur du sommet d'un récipient tubulaire tandis que l'orifice d'évacuation pour l'air de soufflage est formé dans le côté extérieur du sommet de l'autre récipient tubulaire.

8. Procédé de moulage par soufflage selon la revendication 1, dans lequel deux récipients tubulaires, dont les fonds sont disposés aux deux extrémités, sont moulés par soufflage selon un mode symétrique sommet contre sommet, avec entre eux une partie non nécessaire à découper, et un orifice d'admission pour l'air de soufflage est formé dans la partie non nécessaire entre les deux sommets des récipients tubulaires, et l'orifice d'évacuation pour l'air de soufflage est formé en dehors de la ligne de coupe située aux deux extrémités.
